# EUROPEAN PATENT APPLICATION

(11) **EP 3 222 547 A1**
(43) Date of publication of application: **27.09.2017**
(21) Application number: 15860602.0
(22) Date of filing: 18.08.2015
(51) Int. Cl.: B65D 35/22, B65D 35/28, B65D 83/00, B65D 85/72

(54) **DOUBLE-WALLED CONTAINER FOR HIGHLY VISCOUS LIQUID**

(30) Priority: 18.11.2014 JP 2014233786
(71) Applicant: Heiwa Kagaku Industry Co., Ltd., Chiba 272-0004 (JP)
(72) Inventor: HATAKEYAMA Kazuyuki, Saku-shi Nagano 385-0027 (JP); HATAKEYAMA Harumasa, Funabashi-shi Chiba 273-0035 (JP)
(74) Representative: Gill Jennings & Every LLP
(86) International application number: PCT/JP2015/073079
(87) International publication number: WO 2016/080030

(57) **Abstract**

Provided is a double container which comprises a relatively rigid outer container and a flexible inner container disposed inside the outer container and capacity-variable in response to an amount of a content thereof. The double container is configured to contain, particularly, a high-viscosity liquid, e.g., a liquid having a viscosity of 1000 to 100,000 mPa/s, and to be easily produced by a forming technique having no significant difference from conventional techniques, wherein the double container for a high-viscosity liquid is capable of containing the content without causing oxidation thereof, while maintaining the outer container in its original shape or dimensions, and discharging the content by squeezing the outer container, irrespective of a level of a remaining amount of the content.

## Description

### TECHNICAL FIELD

The present invention relates to a double container for containing a high-viscosity liquid such as mayonnaise or grease. More specifically, the present invention relates to a double container which comprises a relatively-rigid outer container, and a flexible inner container disposed inside the outer container and capacity-variable in response to an amount of a content thereof, wherein the double container is capable of containing a high-viscosity liquid such as mayonnaise or grease, without causing the high-viscosity liquid to contact with air, and conveniently discharging the high-viscosity liquid, irrespective of a level of a remaining amount of the high-viscosity liquid.

### BACKGROUND ART

It is ideal that a liquid container is capable of, even after using or consuming a part of a content thereof, keeping the remaining content from contacting with external air and thereby preventing oxidation of the remaining content. As used in this specification, the term "liquid" means a substance which has a given volume but does not have a definite shape, and includes a low-viscosity liquid such as water, soy sauce or vinegar, and a high-viscosity liquid such as oil, mayonnaise or grease.

Specifically, in a commonly-used liquid container, it is easy to prevent oxidation of a content thereof during a period after hermetically closing the container through until the container is opened. For example, it can be achieved by, after filling the container with the content and before hermetically closing the container, vacuumizing an internal space of the container, or filling the internal space with inert gas such as nitrogen gas. On the other hand, in a situation where the container is opened to consume a part of the content, so that an unused part of the content remains in the container, external air generally enters the container in a volume corresponding to an amount of consumption of the content, causing oxidation of the remaining content. In order to prevent such oxidation, an antioxidant is contained in the content, in some cases.

There are also some cases where liquid is contained in a deformable container. In such cases, along with consumption of a content of the container, the container deforms so as to deflate from its original shape. The container after undergoing the deflation becomes ugly, thereby leading to a problem, for example, that such a container is undesirable for being placed on a table of a restaurant. Further, a cautionary note for human consumption, a best-before-end date, an allergy-associated cautionary note, performance and others are described on an outer surface of the container. The deflation of the container leads to another problem that these descriptions become illegible or unreadable. Moreover, the remaining content can gather at one corner of the container along with a decrease in the content. This leads to a problem that the container cannot be placed on a flat surface to stand upright, or the remaining content can be discharged from the container only after moving the remaining content to a vicinity of an outlet of the container.

With a view to preventing oxidation of the remaining content, and eliminating the negative effects of deflation of the container, there has been proposed a container comprising a rigid outer container (rigid outer container layer) and a flexible inner container (flexible inner container layer), wherein the container is configured to, when a content of the container is consumed, reduce a capacity of the flexible inner container by an amount corresponding to an amount of consumption of the content, without causing deformation of the rigid outer container, to thereby prevent external air from entering the flexible inner container. For example, this container is used for a liquid seasoning such as soy sauce.

As the above conventional double container configured to reduce a capacity of a flexible inner container by an amount corresponding to an amount of consumption of a content thereof, without causing deformation of a rigid outer container, to thereby prevent external air from entering the flexible inner container, there has been proposed a dispensing container comprising: a container body having a flexible inner (internal) container which contains a content and deforms so as to deflate along with a decrease in the content, and an outer (external) container inside which the inner container is attached, wherein the outer container is elastically deformable and formed with an air inlet opening for introducing external air into a space with respect to the inner container; a discharge cap attached to a mouth portion of the container body, wherein the discharge cap has a top portion formed with a discharge port for discharging the content; an external-air inlet port which communicates between outside and the suction opening; and an air valve unit operable to switch between communication between the external-air inlet port and the suction opening, and shutoff of the communication, wherein a gas which is more easily compressible than the content is contained in the inner container to form a gas space, and wherein a volume of the gas is 4% or more of a capacity of the inner container, and the gas is quickly movable inside the inner container when the dispensing container is inclined to take a discharging posture so as to cause the content to be discharged from the discharge port (see, for example, the following Patent Document 1).

A problem to be solved in the above conventional double container comprising a flexible inner container configured to be reduced in capacity by an amount corresponding to an amount of consumption of a content thereof, i.e., to deform so as to deflate along with a decrease in the content, without causing deformation of a rigid outer container, to thereby prevent external air from entering the flexible inner container, is that the flexible inner container needs to be in contact with an inner surface of the outer container during production, and then to be separated from the inner surface of the outer container in response to consumption of the content to thereby allow external air to be introduced into a space between the flexible inner container and the outer container. As a conventional technique characterized in that it is capable of relatively easily forming the opening for introducing external air, there has been proposed a synthetic resin blow-molded container comprising: an outer layer forming an outer shell; and an inner layer forming an inner pouch and releasably laminated to the outer layer, wherein: the inner layer has a bulging portion formed in a peripheral wall of a cylindrical mouth portion of the container, and a portion of the outer layer laminated to a vicinity of a tip of the bulging portion is standingly formed as a flat tab piece having a circumferential edge around the tip to serve as a tearable base end, wherein the base end is formed in a notch-like shape; and wherein: the bulging portion of the inner layer is formed by subjecting a portion of the peripheral wall of the cylindrical mouth portion to bulge forming together with the outer layer, during blow molding of the container; the tab piece is formed by subjecting the portion of the outer layer laminated to the vicinity of the tip of the bulging portion of the inner layer to pressing using mating surfaces of split dies used in the blow molding; and the notch-like shape of the base end is formed along a shape of a die cavity during formation of the bulging portion; whereby a portion of the outer layer can be peelingly removed from the vicinity of the tip of the bulging portion of the inner layer to provide a suction opening for introducing external air between the outer layer and the inner layer (see, for example, the following Patent Document 2).

### CITATION LIST

### [Patent Document]

Patent Document 1: JP 5295460B
Patent Document 2: JP 4936249B

### SUMMARY OF INVENTION

### [Technical Problem]

When the content is a liquid similar to pure water having a low viscosity, e.g., a so-called liquid seasoning such as soy sauce or vinegar, the dispensing container proposed by the Patent Document 1 can carry out given actions, i.e., reduce a capacity of the flexible inner container by an amount corresponding to an amount of consumption of the content, without causing deformation of the rigid outer container, to thereby keep external air from entering the flexible inner container to prevent oxidation of the content. However, when the content is a high-viscosity liquid such as mayonnaise, the content is likely to hinder an action of a valve structure structurally required to be actuated with an extremely small operation, thereby making it impossible to perform a given valve action. Moreover, the content is highly likely to cause clogging of a narrow air passage. Thus, there are quite a lot of problems in actually using the dispensing container at home while containing a high-viscosity content.

The dispensing container proposed by the Patent Document 1 is intended to contain a low-viscosity content, so that the dispensing container is oriented laterally or downwardly to cause the content to be discharged or to flow out or drips, from a spout of the container, by gravity. On the other hand, a high-viscosity seasoning such as mayonnaise never flows out or drips from a normal-size spout of a container. Therefore, for discharging the content, it is necessary to reduce the capacity of the flexible inner container, for example, by squeezing the flexible inner container. However, the dispensing container proposed by the Patent Document 1 is configured to introduce air between the flexible inner container and the outer container having an original shape thereof, in a freely releasable manner, and the outer container is maintained in the original shape or dimensions. Thus, it is assumed that, even if the outer container is squeezed, the flexible inner container is hardly squeezed, and thereby the content fails to be discharged.

The synthetic resin blow-molded container proposed by the Patent Document 2 is also intended to intended to contain a low-viscosity content, so that this container is oriented laterally or downwardly to cause the content to flow out or drips from a spout of the container, under its own weight. On the other hand, a high-viscosity seasoning such as mayonnaise never flows out or drips from a normal-size spout of a container. Therefore, for discharging the content, it is necessary to reduce the capacity of the flexible inner container, for example, by squeezing the flexible inner container. However, the synthetic resin blow-molded container proposed by the Patent Document 2 is configured to introduce air between the flexible inner container and the outer container having an original shape thereof, in a freely releasable manner, and the outer container is maintained in the original shape or dimensions. Thus, it is assumed that, even if the outer container is squeezed, the flexible inner container is hardly squeezed, and thereby the content fails to be discharged.

### (Object of Invention)

The present invention has been made in view of the above problem occurring when a high-viscosity liquid is contained in a double container comprising a relatively-rigid outer container and a flexible inner container disposed inside the outer container and capacity-variable in response to an amount of a content thereof. That is, in a double container comprising a relatively-rigid outer container and a flexible inner container disposed inside the outer container and capacity-variable in response to an amount of a content thereof, it is an object of the present invention to provide a double container configured to contain, particularly, a high-viscosity liquid, e.g., a liquid having a viscosity of 1000 to 100,000 mPa/s, and to be easily produced by a forming technique having no significant difference from conventional techniques, wherein the double container for a high-viscosity liquid is capable of containing the content without causing oxidation thereof, while maintaining the outer container in its original shape or dimensions, and discharging the content by squeezing the outer container, irrespective of a level of a remaining amount of the content.

It is another object of the present invention to provide a double container for a high-viscosity liquid, which is free from a problem that, along with consumption of a content thereof, the container deforms so as to deflate from its original shape and thereby becomes ugly or becomes unable to stand upright, resulting, for example, in becoming undesirable for being placed on a table of a restaurant.

It is yet another object of the present invention to provide a double container for a high-viscosity liquid, which is free from a problem that, due to deflation of the container, a cautionary note for human consumption, a best-before-end date, an allergy-associated cautionary note, performance and others described on an outer surface of the container become illegible or unreadable.

It is still another object of the present invention to provide a double container for a high-viscosity liquid, which is free from a problem that, due to a remaining content gathering at one corner of the container along with a decrease in the content, the container cannot be placed on a flat surface to stand upright, or the remaining content can be discharged from the container only after moving the remaining content to a vicinity of an outlet of the container.

### [Solution to Technical Problem]

According to a first aspect of the present invention, there is provided a double container for a high-viscosity liquid, which comprises: a rigid outer container layer and a flexible inner container layer which are formed in contact with each other, and are partly separable from each other; and a one-way valve for introducing external air into a space formed between the rigid outer container layer and the flexible inner container layer when they are separated from each other.

### [Effect of Invention]

As regards a double container comprising a rigid outer container layer and a flexible inner container layer disposed inside the rigid outer container layer and capacity-variable in response to an amount of a content thereof, the present invention can provide a double container configured to contain, particularly, a high-viscosity liquid, e.g., a liquid having a viscosity of 1000 to 100,000 mPa/s, and to be easily produced by a forming technique having no significant difference from conventional techniques, wherein the double container for a high-viscosity liquid is capable of containing the content without causing oxidation thereof, while maintaining the rigid outer container layer in its original shape or dimensions, and discharging the content by squeezing the rigid outer container layer, irrespective of a level of a remaining amount of the content.

The first aspect of the present invention can be suitably implemented for a liquid having a viscosity of 2000 to 90,000 mPa/s, more specifically, a liquid having a viscosity of 3000 to 80,000 mPa/s.

The present invention can also provide a double container for a high-viscosity liquid, which is free from a problem that, along with consumption of a content thereof, the container deforms so as to deflate from its original shape and thereby becomes ugly or becomes unable to stand upright, resulting, for example, in becoming undesirable for being placed on a table of a restaurant, and a problem that, due to the deflation of the container, a cautionary note for human consumption, a best-before-end date, an allergy-associated cautionary note, performance and others described on an outer surface of the container become illegible or unreadable.

Further, the present invention can provide a double container for a high-viscosity liquid, which is configured to press the flexible inner container layer by a gas pressure therearound, so that it becomes free from a problem that, due to a remaining content gathering at one corner of the container along with a decrease in the content, the container cannot be placed on a flat surface to stand upright, or the remaining content can be discharged from the container only after moving the remaining content to a vicinity of an outlet of the container.

According to a second aspect of the present invention, there is provided a liquid to be contained in a double container for a high-viscosity liquid, comprising: a rigid outer container layer and a flexible inner container layer which are formed in contact with each other, and are partly separable from each other; and a one-way valve for introducing external air into a space formed between the rigid outer container layer and the flexible inner container layer when they are separated from each other, wherein the liquid has a viscosity of 1000 to 100,000 mPa/s.

According to a third aspect of the present invention, there is provided a liquid to be contained in a double container for a high-viscosity liquid, comprising: a rigid outer container layer and a flexible inner container layer which are formed in contact with each other, and are partly separable from each other; and a one-way valve for introducing external air into a space formed between the rigid outer container layer and the flexible inner container layer when they are separated from each other, wherein the liquid is mayonnaise.

According to a fourth aspect of the present invention, there is provided a liquid to be contained in a double container for a high-viscosity liquid, comprising: a rigid outer container layer and a flexible inner container layer which are formed in contact with each other, and are partly separable from each other; and a one-way valve for introducing external air into a space formed between the rigid outer container layer and the flexible inner container layer when they are separated from each other, wherein the liquid is grease.

### (First embodiment of the present invention)

In the present invention, the one-way valve may be provided in a bottom portion of the rigid outer container layer.

### (Second embodiment of the present invention)

In the present invention, the one-way valve may be fixed to an inside bottom cap attached to the bottom portion of the rigid outer container layer.

### (Third embodiment of the present invention)

In the present invention, the one-way valve may be covered by an outside bottom cap attached to the bottom portion of the rigid outer container layer.

### BRIEF DESCRIPTION OF DRAWINGS

FIG. 1 is a vertical sectional view depicting a double container for a high-viscosity liquid, according to a first embodiment of the present invention.
FIGS. 2(a) and 2(b) depict the double container according to the first embodiment, wherein FIG. 2(a) is a vertical sectional view depicting an entirety thereof, and FIG. 2(b) is a vertical sectional view depicting an area indicated by the dotted line B in FIG. 2(a).
FIG. 3 is a perspective view depicting a first example of a one-way valve used in the double container according to the first embodiment.
FIG. 4 is a sectional view taken along the line IV-IV in FIG. 3.
FIG. 5 is a perspective view depicting a one-way valve used in a modification of the double container according to the first embodiment.
FIG. 6 is a sectional view depicting the one-way valve used in the modification of the double container according to the first embodiment and a vicinity thereof.
FIG. 7 is a vertical sectional view depicting a double container for a high-viscosity liquid, according to a second embodiment of the present invention.

### DESCRIPTION OF EMBODIMENTS

### [First Embodiment]

### (Configuration)

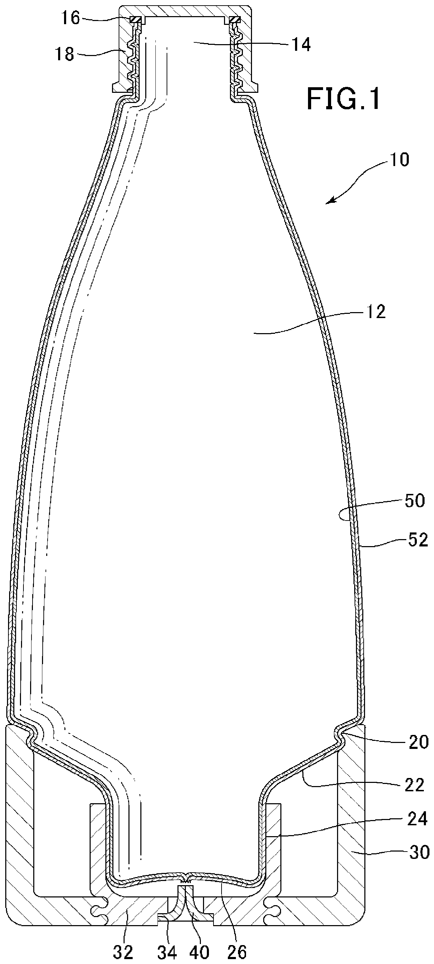

As depicted in FIG. 1, a double container 10 for a high-viscosity liquid, according to a first embodiment of the present invention, is capped by a container cap 18 equipped with a packing 16 and threadably mounted on a discharge port 14 of a bottle body 12.

A bottom region of the bottle body 12 has a recessed portion 20 having an annular shape and extending horizontally, a conical surface portion 22 located just below the recessed portion 20, a hermetically-sealed circular cylindrical portion 24 located just below the conical surface portion 22, and a bottom portion 26 forming a bottom of the hermetically-sealed circular cylindrical portion 24.

A lower section of the double container 10 is provided with: an outside bottom cap 30 fitted in the recessed portion 20; an inside bottom cap 32 fitted on the hermetically-sealed circular cylindrical portion 24 and fitted in the outside bottom cap 30; and a one-way valve 40 fitted in a valve-receiving hole 34 formed in a central region of the inside bottom cap 32. An adhesive may be used for the fitting of the inside bottom cap 32 with respect to the hermetically-sealed circular cylindrical portion 24, and the fitting of the one-way valve 40 with respect to the valve-receiving hole 34, so as to ensure fitting engagement and hermetical sealing.

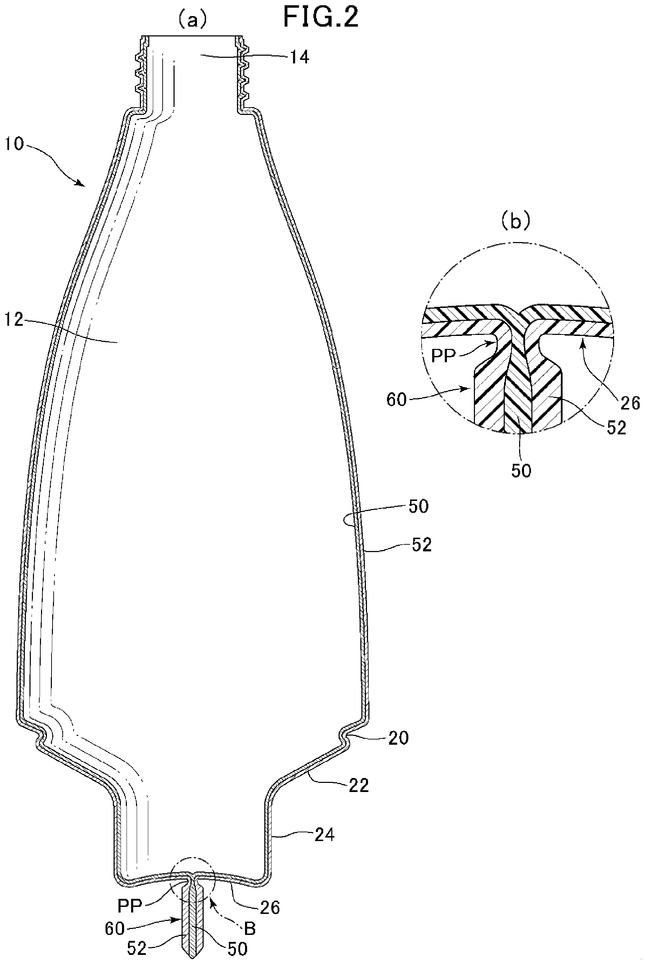

The bottle body 12 is formed by clamping a parison using a split-type forming die, and then applying a blow pressure to an inside of the parison so as to press the parison against a cavity of the forming die. As depicted in FIGS. 2(a) and 2(b), the bottom body 12 comprises: a trilaminar flexible inner layer 50 consisting of a low-density polyethylene (LDPE) sub-layer, an adhesive sub-layer such as a polyolefin-based adhesive resin, and an ethylene-vinylalcohol copolymer (EVOH) sub-layer; and a rigid outer layer 52 made of polypropylene (PP), which are arranged in this order in an outward direction.

There is no adhesivity between the flexible inner layer 50 and the rigid outer layer 52 of the bottle body 12, so that they are easily separable from each other. However, in an upper section of the bottle body 12, particularly the discharge port 14, a cross-sectional area of a discharge passage is not significantly different from an original cross-sectional area of the parison, i.e., an expansion caused by the blow pressure is small and an original thickness of the parison is substantially maintained. That is, in the upper section, the flexible inner layer 50 and the rigid outer layer 52 formed integrally are generally solidly integrated together and never separated from each other.

In the lower section of the bottle body 12, a portion of the parison located below the bottom portion 26 is formed as a bottom burr 60 through a pinched portion PP. In the bottom burr 60, the flexible inner layer 50 defining respective inner surfaces of the conical surface portion 22, the hermetically-sealed circular cylindrical portion 24 and the bottom portion 26 exists as one central layer thereof. Two rigid outer layers 52 exist, respectively, as opposite lateral layers of the bottom burr 60, namely on both sides of the flexible inner layer 50.

On the basis of the presence of the pinched portion PP having a small cross-sectional area, the bottom burr 60 can be easily pulled away from the bottle body 12. As can be understood from FIG. 2(b), in an area of the bottom portion 26 from which the bottom burr 60 has been pulled away, an edge of the one flexible inner layer 50 and edges of the rigid outer layers 52 on both sides of the flexible inner layer 50 are exposes to outside. When the flexible inner layer 50 and the rigid outer layer 52 are separated from each other and a pressure therebetween becomes lower, portions of the flexible inner layer 50 and the rigid outer layer 52 in the area of the bottom portion 26 from which the bottom burr 60 has been pulled away are also separated from each other to form a thin gap therebetween. Thus, a gap, i.e., space, formed as a result of the separation between the flexible inner layer 50 and the rigid outer layer 52 is maintained at 1 atm which is equal to an ambient pressure, by air introduced through the thin gap.

The outside bottom cap 30 is molded using an olefin-based resin such as polypropylene or high-density polyethylene (HDPE), or a relatively rigid resin.

The inside bottom cap 32 is also molded using an olefin-based resin such as polypropylene or high-density polyethylene (HDPE), or a relatively rigid resin.

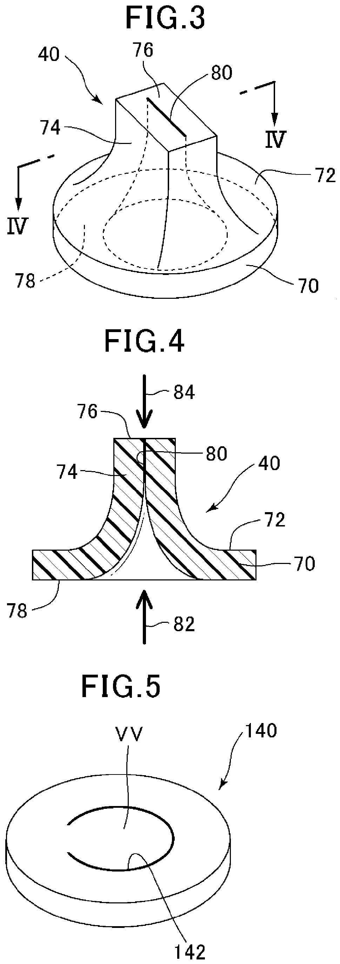

The one-way valve 40 is molded using an elastic resin such as thermoplastic elastomer. As depicted in FIGS. 3 and 4, the one-way valve 40 comprises a disk-shaped base plate portion 70, and a chevron-shaped portion 74 gradually rising from one surface 72 of the base plate portion 70. The chevron-shaped portion 74 has a rectangular-shaped top edge face 76 whose central region is formed with an air inlet groove 80 extending to the other surface 78 the base plate portion 70.

Referring to FIG. 4, when a high pressure is applied to the one-way valve 40 from a direction indicated by the arrowed line 82, i.e., a pressure in a region where the arrowed line 84 is described becomes lower than that in a region where the arrowed line 82 is described, the chevron-shaped portion 74 is deformed to open the air inlet groove 80 to introduce air in the direction indicated by the arrowed line 82.

On the other hand, when a high pressure is applied from a direction indicated by the arrowed line 84, i.e., a pressure in the region where the arrowed line 82 is described becomes lower than that in the region where the arrowed line 84 is described, the chevron-shaped portion 74 is compressed to tightly close the air inlet groove 80 to make it possible to release air in the direction indicated by the arrowed line 84.

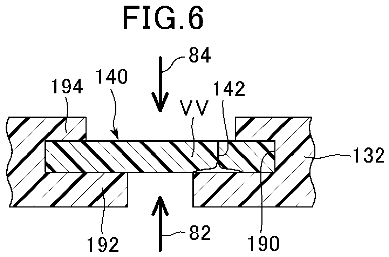

In a modification of the first embodiment, a one-way valve 140 is also molded using an elastic resin such as thermoplastic elastomer. As depicted in FIGS. 5 and 6, the one-way valve 140 comprises a disk-shaped body whose central region is formed with a C-shaped air inlet groove 142. The air inlet groove 142 is defined by opposed side surfaces of the disk-shaped body. However, when no external load is applied thereto, the air inlet groove 142 is closed to make it impossible to pass air through the one-way valve 140.

As depicted in FIG. 6, the one-way valve 140 is fitted into an annular-shaped recessed inner groove 190 formed in a central region of an inside bottom cap 132. The inside bottom cap 132 has a lower support portion 192 formed on the side of external air to protrude along a lower surface of the recessed inner groove 190 so as to cover the air inlet groove 142, and an upper support portion 194 formed on an inward side of the inside bottom cap 132 to protrude along an upper surface of the recessed inner groove 190 without covering the air inlet groove 142.

Referring to FIG. 6, when a high pressure is applied to the one-way valve 140 from a direction indicated by the arrowed line 82, a portion VV surrounded by the C-shaped air inlet groove 142 is deformed to expand the air inlet groove 142 to introduce air in the direction indicated by the arrowed line82.

On the other hand, when a high pressure is applied to the one-way valve 140 from a direction indicated by the arrowed line 84, the air inlet groove 142 is not expanded because the portion VV is supported by the lower support portion 192, so that it is impossible to release air in the direction indicated by the arrowed line 84.

### (Functions)

A high-viscosity liquid such as mayonnaise is contained in the aforementioned double container 10. The container cap 18 is detached, and the rigid outer layer 52 is squeezed to push the content out from the discharge port 14. After pushing out the content by a given amount, the double container 10 is placed on a horizontal surface of a table or the like to stand upright.

In response to a decrease in squeezing force against the double container 10, the rigid outer layer 52 is urged to return to its original shape. On the other hand, the content located in the discharge port 14 has a given viscosity, so that external air is not introduced and thereby the flexible inner layer 50 cannot be deformed to increase its capacity. Thus, the flexible inner layer 50 and the rigid outer layer 52 are separated from each other to form a low-pressure space therebetween. According to this low pressure, the air inlet groove 80 is opened to allow external air to be introduced. As a result of introduction of external air through the air inlet groove 80, a pressure in the space formed by the separation between the flexible inner layer 50 and the rigid outer layer 52 is set to 1 atm, and kept in a stable state.

Subsequently, the rigid outer layer 52 is squeezed to further discharge the content. In this case, the pressure in the space between the flexible inner layer 50 and the rigid outer layer 52 becomes greater than 1 atm, so that the air inlet groove 80 is closed to make it impossible to release air through the one-way valve 40. As a result of further squeezing of the rigid outer layer 52, the pressure in the space between the flexible inner layer 50 and the rigid outer layer 52 becomes greater than 1 atm, and the flexible inner layer 50 is squeezed by the pressure greater than 1 atm, so that the content is discharged.

### [Second Embodiment]

### (Configuration)

A configuration of a double container 210 for a high-viscosity liquid, according to a second embodiment of the present invention, will be described below. In the following description, the same element or component as that in the double container 10 according to the first embodiment is assigned with the same reference sign as that in the first embodiment, and its description will be omitted.

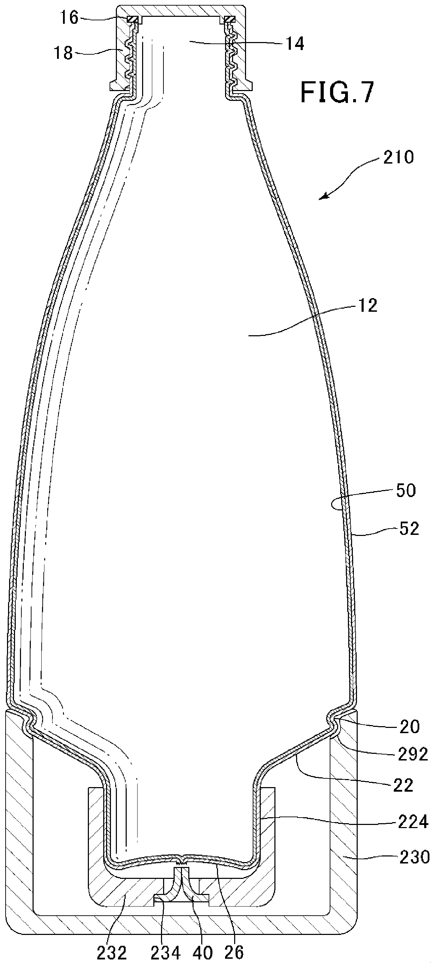

A lower portion of the double container 210 is, as shown in FIG. 7, provided with: an outside bottom cap 230 fitted in a recessed portion 20; an inside bottom cap 232 fitted on a hermetically-sealed circular cylindrical portion 224 of a bottle body 12; and a one-way valve 40 fitted in a valve-receiving hole 234 formed in a central region of the inside bottom cap 232. An adhesive may be used for the fitting of the inside bottom cap 232 with respect to the hermetically-sealed circular cylindrical portion 224, and the fitting of the one-way valve 40 with respect to the valve-receiving hole 234, so as to ensure fitting engagement and hermetical sealing.

An upper end of the outside bottom cap 230, i.e., a portion of the outside bottom cap 230 fitted in the recessed portion 20 of the bottle body 12, is formed with a plurality of upward air inlet grooves 292 each extending obliquely upwardly. The upward air inlet grooves 292 communicate between an inside and an outside of the outside bottom cap 230 along the recessed portion 20.

A lower portion of the double container 210 is provided with: an inside bottom cap 232 fitted on a hermetically-sealed circular cylindrical portion 224 of a bottle body 12; and a one-way valve 40 fitted in a valve-receiving hole 234 formed in a central region of the inside bottom cap 232. An adhesive may be used for the fitting of the inside bottom cap 232 with respect to the hermetically-sealed circular cylindrical portion 224, and the fitting of the one-way valve 40 with respect to the valve-receiving hole 234, so as to ensure fitting engagement and hermetical sealing.

An advantage of the double container 210 is in that, even in a situation where the double container 210 is placed on a location where water is accumulated, the double container 210 can be normally used without sucking water, as long as a water depth in the location is less than a height dimension of the outside bottom cap 230.

### LIST OF REFERENCE SIGNS

- PP:: pinched portion
- 10, 210:: double container for high-viscosity liquid
- 12:: bottle body
- 14:: discharge port
- 18:: container cap
- 20:: recessed portion
- 22:: conical surface portion
- 24, 224:: hermetically-sealed circular cylindrical portion
- 26:: bottom portion
- 30, 230:: outside bottom cap
- 32, 132, 232:: inside bottom cap
- 34, 234:: valve-receiving hole
- 40, 140:: one-way valve
- 50:: flexible inner layer
- 52:: rigid outer layer
- 60:: bottom burr
- 70:: base plate portion
- 74:: chevron-shaped portion
- 76:: top edge face
- 82, 84:: arrowed line
- 180:: air inlet groove
- 190:: recessed inner groove
- 192:: lower support portion
- 194:: upper support portion
- 292:: upward air inlet grooves

## Claims

1. A double container for a high-viscosity liquid, comprising: a rigid outer container layer and a flexible inner container layer which are formed in contact with each other, and are partly separable from each other; and a one-way valve for introducing external air into a space formed between the rigid outer container layer and the flexible inner container layer when they are separated from each other.

2. The double container as recited in claim 1, wherein the one-way valve is provided in a bottom portion of the rigid outer container layer.

3. The double container as recited in claim 1, wherein the one-way valve is fixed to an inside bottom cap attached to the bottom portion of the rigid outer container layer.

4. The double container as recited in claim 1, wherein the one-way valve is covered by an outside bottom cap attached to the bottom portion of the rigid outer container layer.

5. A liquid which is contained in the double container as recited in claim 1, wherein the liquid has a viscosity of 1000 to 100,000 mPa/s.

6. A liquid which is contained in the double container as recited in claim 1, wherein the liquid is mayonnaise.

7. A liquid which is contained in the double container as recited in claim 1, wherein the liquid is grease.
